**Europäisches Patentamt**

**European Patent Office**

**Office européen des brevets**

(19)

(11) Veröffentlichungsnummer: **0 223 798**
**B1**

(12) # EUROPÄISCHE PATENTSCHRIFT

(45) Veröffentlichungstag der Patentschrift:
**10.08.88**

(21) Anmeldenummer: **86903208.6**

(22) Anmeldetag: **10.05.86**

(86) Internationale Anmeldenummer:
**PCT/DE 86/00197**

(87) Internationale Veröffentlichungsnummer:
**WO 86/06791 (20.11.86 Gazette 86/25)**

(51) Int. Cl.⁴: **F 02 B  53/08,** F 02 B  53/02,
F 01 C  11/00

(54) DREHKOLBENBRENNKRAFTMASCHINE.

(30) Priorität: **13.05.85  DE 3517260**

(43) Veröffentlichungstag der Anmeldung:
**03.06.87 Patentblatt 87/23**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**DE-A-2 009 732**
**DE-C-1 002 562**
**US-A-3 612 735**
**US-A-4 236 496**

(73) Patentinhaber: **MOTOS MOTOR- TECHNIK GMBH,
Ringstrasse 1, D-4512 Wallenhorst (DE)**

(72) Erfinder: **STALLKAMP, Heinrich, An der Dörnte 6,
D-4512 Wallenhorst (DE)**
Erfinder: **OSTERBURG, Günter, Erich- Maria-
Remarque- Ring 11, D-4500 Osnabrück (DE)**

(74) Vertreter: **Busse & Busse Patentanwälte, Postfach
1226 Grosshandelsring 6, D-4500 Osnabrück (DE)**

## Beschreibung

## Drehkolbenbrennkraftmaschine

Die Erfindung betrifft eine Drehkolbenbrennkraftmaschine nach dem Oberbegriff des Anspruchs 1.

Derartige Drehkolbenbrennkraftmaschinen sind z. B. der DE-C-1 002 562 in außenachsiger Bauweise mit zwei übereinstimmend geformten Kolben bekannt, die abwechselnd den gemeinsamen Überschneidungsbereich zwischen den beiden Achsen durchlaufen und dabei die Kolbenbahn des anderen Kolbens unterteilen. Damit wird eine Zusammenarbeit der beiden Drehkolben ermöglicht, bei der jeweils einer der beiden Drehkolben eine Arbeitsphase durchläuft und dabei in Drehrichtung voran einen sich verengenden und in Drehrichtung nachfolgend einen sich aufweitenden Raum bildet. Dies schafft die Möglichkeit eines Viertaktbetriebes, bei dem das Ansaugen und Komprimieren von Frischgas einem (Lade-) Kolben zufällt, das Expandieren und Ausschieben dem anderen (Treib-) Kolben, wobei ein Übergangskanal vom Ladekolben zum Treibkolben eine Kammer zur Brennstoffeingabe und -Zündung enthält.

Bei anderen bekannten Drehkolbenbrennkraftmaschinen (DE-A-2 009 732) werden hierzu zwei Stufen benötigt, wobei in jeder Stufe ein Drehkolbenläufer mit einem Dichtungsläufer zusammenwirkt. Dieses Zusammenwirken von Drehkolbenläuter und Dichtungsläufer ist z. B. auch aus der US-A-3 612 735 bekannt.

Bei einer Maschine gemäß dem Oberbegriff von Anspruch 1 werden diese Funktionen mit Lade- und Treibkolben ermöglicht, die nicht nur totpunktfrei laufen, wie es bei Drehkolbenmaschinen üblich ist, sondern auch bei einer reinen Rotationsbewegung vollkommen ausgewuchtet werden können.

Allerdings zeigt sich bei einem solchen System, daß die übereinstimmende Kolbengeometrie der beiden Kolben zu Durchsätzen bei Ladekolben und Treibkolben führt, die einander fehlangepaßt sind. In der Brennkammer nimmt die Gasausdehnung derart zu, daß die Expansion am Treibkolben bis zum Erreichen des Auslasses nur einen Teil des Drucks nutzt, während eine erhebliche Restleistung ungenutzt verloren geht.

Problematisch ist weiterhin bei vorbekannten Drehkolbenmaschinen dieser Art, wenn eine Ventilsteuerung über komplex geformten Steuerkörper erfolgt, deren Schließwirkung beispielsweise einen Wälzeingriff von Kontaktflächen an beiden Drehkolben voraussetzt. Damit wird ein enger, Anlageflächen voraussetzender Dichtungseingriff erforderlich, der die besondere Befähigung eines solchen Drehkolbenmotors zur Arbeit bei hohen Drehzahlen begrenzt.

Nachteilig bei bekannten Drehkolbenbrennkraftmaschinen ist weiterhin der mit Anordnung der Ventil-Steuerkörper auf der einen oder anderen Seite dynamisch nicht ausgewuchtete und durch Ausgleichgewichte nur schwerfällig auszugleichende Aufbau.

Aufgabe der Erfindung ist es dementsprechend, eine Drehkolbenbrennkraftmaschine zu schaffen, die die ungenützte Restleistung reduziert und die für einen hochdrehenden, vibrationsarmen Lauf geeignet ist.

Gemäß der Erfindung wird sich diese Aufgabe von einer Drehkolbenmaschine nach dem Oberbegriff des Anspruchs 1 ausgehend durch die kennzeichnenden Merkmale des Anspruchs 1 gelöst. Dieser Lösung liegt die Erkenntnis zugrunde, daß die Arbeitsräume von Ladekolben und Treibkolben unterschiedlich sein sollten und auch unterschiedlich groß gestaltet werden können. Zwar sind Ringkolben der hier in Betracht kommenden Art im Ringquerschnitt aufeinander abgestimmt, damit sich im Oberschneidungsbereich eine wechselweise Absperrung durch jeden der Kolben ergibt, es hat sich aber gezeigt, daß die Umfangslänge der teilringförmigen Kolben unterschiedlich gewählt werden kann, in dem ein Kolben verlängert werden kann, wenn der andere Kolben etwa um ein entsprechendes Stück verkürzt wird, wenn sich dann wieder die Umfangslängen zu näherungsweise 360° ergänzen und die Stirnflächen der Rotations-Ringkolben in enger Annäherung, insbesondere nach einer Rollkurve aufeinander abgestimmt sind.

Dabei lassen sich Arbeitsräume mit sehr geringen Verlusträumen und mit engen aber langen Arbeitsspalten einhalten, die jedenfalls für höhere Drehzahlen das Arbeiten ohne reibende Dichtungen erlauben.

Weitere Merkmale und Vorteile der Erfindung ergeben sich aus den Ansprüchen und der nachfolgenden Beschreibung, in der zwei Ausführungsbeispiele des Gegenstandes der Erfindung anhand einer Zeichnung näher erläutert sind. In der Zeichnung zeigen:

Fig. 1 Schnitt durch eine erste Ausführungsform der Drehkolbenbrennkraftmaschine, in Richtung der Drehachsen gesehen

Fig. 2 bis 4 schematisierte Teil-Schnittdarstellungen entsprechend Fig. 1 bei verschiedenen Umlaufphasen

Fig. 5 Schnitt nach Linie V-V in Fig. 1

Fig. 6 Schnitt nach Linie VI-VI in Fig. 1

Fig. 7 Schnitt nach Linie VII-VII in Fig. 1

Fig. 8 Schnitt durch eine zweite Ausführungsform der Drehkolbenbrennkraftmaschine, in Richtung der Achsen gesehen,

Fig. 9 u. 10 Schnitt entsprechend der Fig. 8, jedoch bei verschiedenen Umlaufphasen und

Fig. 11 Schnitt nach Linie XI-XI in Fig. 10.

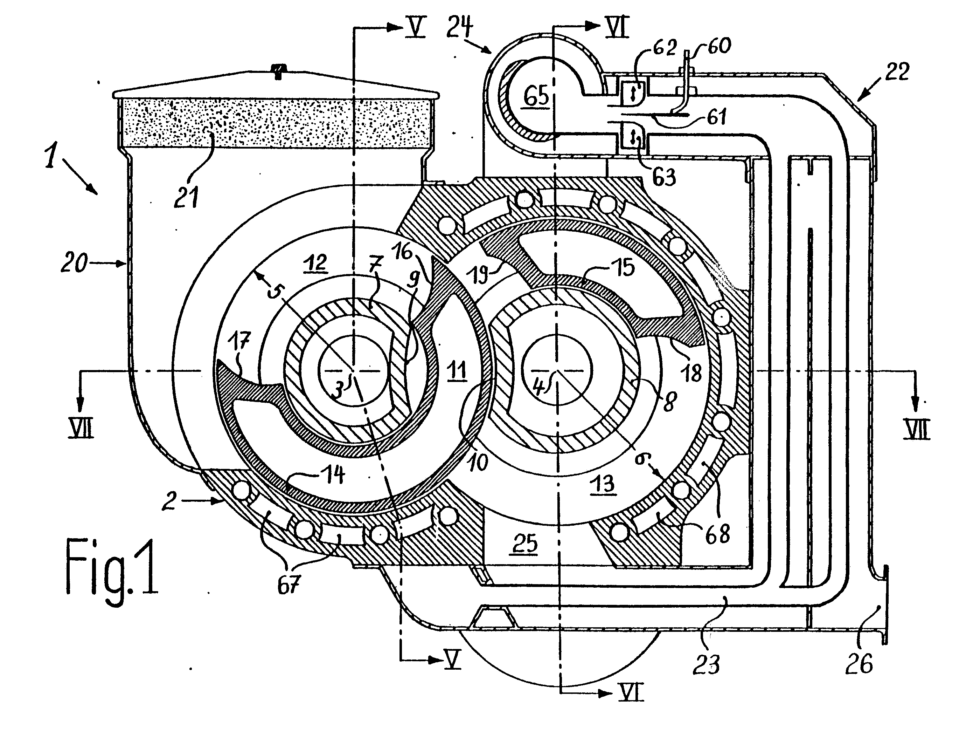

Die aus den Fig. 1 bis 7 ersichtliche, insgesamt mit 1 bezeichnete Drehkolbenbrennkraftmaschine umfaßt einen Gehäuseblock 2, der innenseitig eine zylindrische Kammer mit einem freien Innenquerschnitt in Form zweier einander bereichsweise überdeckender Kreisflächen bildet. Die Mittelpunkte dieser Kreisflächen liegen auf Achsen 3, 4. Der auf die Achse 3 zentrierte Kreisquerschnitt hat einen ersten, kleineren Radius 5, der auf die Achse 4 zentrierte Kreisquerschnitt hat einen (gegenüber dem Radius 5 um etwa 8 %) größeren Radius 6.

Weiterhin ist um die Achse 3 eine Hohlnabe 7 angeordnet, die im wesentlichen am Umfang kreiszylindrisch ausgebildet ist. Ähnlich ist auch um die Achse 4 eine Hohlnabe 8 mit im wesentlichen kreiszylindrischer Form angeordnet. Beide Hohlnaben 7, 8 weisen jeweils auf der einander zugewandten Seite Hohlkehlen 9, 10 in Anpassung an einen Durchdringungsbereich 11 der beiden Kreisquerschnitte im Zylinderblock auf. Damit wird um jede der beiden Naben je ein Ringraum 12 bzw. 13 gebildet, wobei sich diese Ringräume 12 bzw. 13 im Durchdringungsbereich 11 überschneiden.

Die Ringräume 12, 13 haben übereinstimmende radiale Weiten, da die Nabe 8 um eben die Radiendifferenz größer als die Nabe 7 ist, mit der sich auch die Radien 6 und 5 unterscheiden.

Die Ringräume 12 und 13 sind weiterhin gleich breit und fluchten miteinander - ihre axiale Länge und Lage stimmen überein.

In den Ringräumen 12 und 13 ist je ein Kolben 14 bzw. 15 zu einem synchronen gegensinnigen Umlauf angeordnet. Jeder dieser beiden Kolben ist im wesentlichen prismatisch ausgebildet, indem er sich mit dem in Fig. 1 dargestellten Längsschnitt in Achsrichtung erstreckt. Die Längsschnitte nach Fig. 1 veranschaulichen, daß die Kolben den ringförmigen Kolbenbahnen 12, 13 als Teilringstücke angepaßt sind, wobei besonders ausgeformte Stirnflächen 16, 17 am Kolben 14 bzw. Stirnflächen 18, 19 am Kolben 15 ein an schädlichen Räumen besonders armes Ineinandergreifen der beiden Kolben bei einem synchronen gegenseitigen Umlauf ermöglichen. Die Stirnflächen sind zumindest großenteils an Radlinien, z. B. an Epitrochoiden, angepaßt, so daß die Stirnflächen des einen Kolbens von der Endkante des anderen Kolbens abgekämmt werden können. Während die Stirnflächen 16, 17 praktisch durchgehend an eine geeignete Radlinie angepaßt sind, weisen die Stirnflächen 18, 19 gekappte Außenspitzen auf. Dies hat, wie noch näher veranschaulicht wird, einen besonderen Grund in der Funktion des Kolbens 15 als Treibkolben, der mit heißen Gasen beaufschlagt wird, und schützt den Kolben vor örtlicher thermischer Überbeanspruchung. Die Kolben sind hohl ausgeführt, um eine bedarfsgerechte Kühlmitteldurchströmung zu ermöglichen und Gewicht zu sparen.

Die beiden Kolben 14 und 15 überstreichen unterschiedliche Sektorbereiche der jeweiligen Kolbenbahn 12, 13 und lassen einen entsprechend unterschiedlichen Restbereich frei, der jeweils zur Ausbildung von Arbeitsräumen dient. Die unterschiedlichen Umfangslängen der Kolben stehen mit deren Arbeitsfunktionen in enger Beziehung.

Der Kolben 14 ist als Kompressions- oder Ladekolben ausgebildet. Der zugehörige Ringraum 12 öffnet sich schräg nach oben zu einem Ansaugstutzen 20, der mit einem Luftfilter 21 an seiner großflächigen oberen Ausmündung endet. Weiter ist der Ringraum 12 durch besondere Ventileinrichtungen über eine durch einen Wärmetauscher 22 hindurchführende Überschiebeleitung 23 mit einer Brennkammer 24 verbunden, die ihrerseits auf den Ringraum 13 zum Kolben 15 aufschaltbar ist, um den Kolben 15 als Expansions- oder Treibkolben arbeiten zu lassen.

Die expandierten Brenngase verlassen den Ringraum 13 über eine Abgas-Ausströmöffnung 25 durch den Wärmetauscher 22 hindurch zu einem Auspuffstutzen 26 hin.

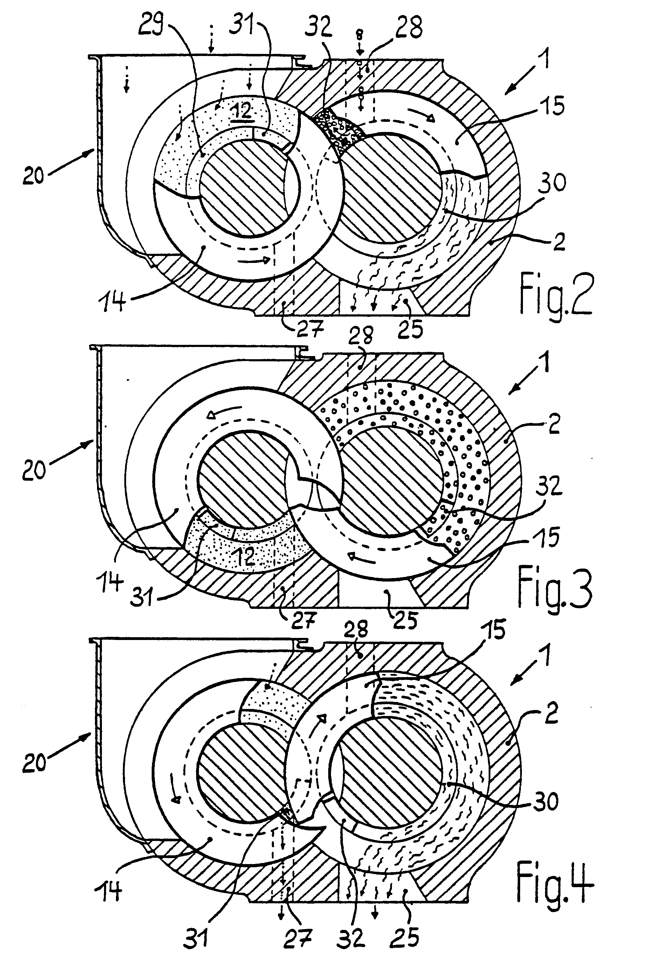

Anhand der Fig. 2 bis 4 lassen sich verschiedene Arbeitsphasen der Brennkraftmaschine 1 (jeweils ohne Wärmetauscher und Brennkammer dargestellt) beobachten. Die Kolben 14, 15 sind dabei auch gleichzeitig Steuerelemente, indem sie die Ansaugöffnung zum Ansaugstutzen 20 bzw. die Ausströmöffnung 25 verschließen oder öffnen. Für die Überleitung von Gasen bzw. Luft vom Arbeitsraum des Ladekolbens 14 zum Arbeitsraum des Treibkolbens 15 sind Überleitungskanäle 27, 28 im Gehäuseblock 2 enthalten, die über Ringscheiben 29, 30 mit Öffnungen 31, 32 als Steuerventile gesteuert werden.

Diese Ringscheiben 29, 30 sind starr mit den zugehörigen Kolben 14, 15 verbunden, wobei deren Querschnitt in Axialrichtung versetzt vor bzw. hinter dem Kolbenquerschnitt liegt. Der Außendurchmesser dieser Ringscheiben ist gegenüber dem des zugehörigen Kolbens so weit reduziert, daß sie nicht aneinanderstoßen: Die Summe der Außenradien der beiden Ringscheiben 29, 30 ist kleiner als der Achsabstand der Drehkolben 14, 15. Ein Öffnen dieser Ringscheiben-Ventile 29, 30 erfolgt dann, wenn die Öffnung 31 sich mit dem Querschnitt des Kanals 27 deckt bzw. wenn die Öffnung 32 sich mit der Öffnung des Kanals 28 deckt.

In der Umlaufphase gemäß Fig. 2 ist der Ringraum 12 am Kolben 14 zum Einlaßstutzen 20 hin offen und kann Frischluft aufnehmen. Etwa eine halbe Kolbendrehung weiter (Fig. 3) schließt der Kolben 14 seinen Ringraum 12 zum Einlaßstutzen ab, während der Kolben 15 in den Überdeckungsbereich einläuft und den Ringraum 12 abriegelt. Damit entsteht ein sich mit dem Umlauf des Kolbens 14 verkürzender und die eingeschlossende Luft verdichtender Arbeitsraum, aus dem die komprimierte Luft erst entweicht, nachdem die Ventilöffnung 31 vor den Kanal 27 gelangt ist. Damit wird komprimierte Luft zur Brennkammer 24 (über den Wärmetauscher 22) gedrückt. Der Wärmetauscher liefert dabei eine vorteilhafte Wärmerückgewinnung von Heißgasen, die zu

einer Vorwärmung und Gasausdehnung der komprimierten Luft dient, bevor diese den Brennraum 24 erreicht. In der Brennkammer 24 ist eine stetige Verbrennung vorgesehen, die zu einem Joul'schen Kreisprozeß mit gutem Wirkungsgrad führt und überdies eine vollkommene, schadgasarme Verbrennung liefert. Die so gewonnenen druckbeaufschlagten Brenngase werden hinter den Kolben 15 in dessen Ringraum 13 eingelassen.

Nach Fig. 2 werden die Brenngase zwischen dem in Expansionsrichtung umlaufenden Kolben 15 und dem den Durchdringungsbereich 11 einnehmenden und damit den Ringraum 13 unterteilenden Kolben 14 eingeleitet.

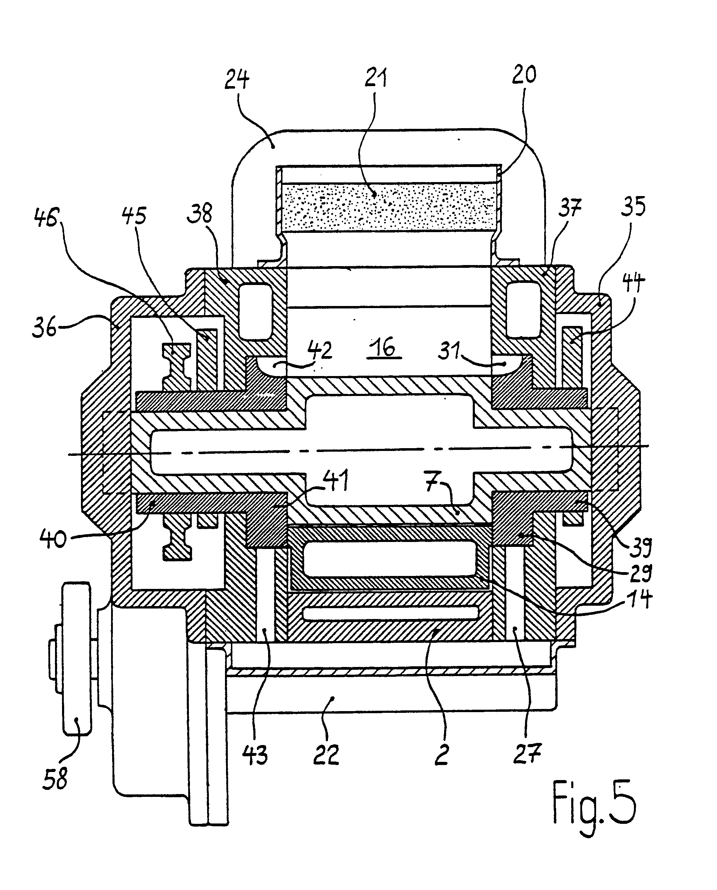

Aus Fig. 3 ist ersichtlich, daß die Expansion über einen weiten Umlaufwinkelbereich von ca. 200° verläuft, ehe der Ringraum des Kolbens 15 sich zur Auslaßöffnung 25 hin öffnet und der Kolben 15 mit seiner Stirnfläche die verbrauchten Gase auszuschieben beginnt (Fig. 4).

Die vorstehenden Funktionen werden mit ungleichen Drehkolben 14, 15 durchgeführt. Der Drehkolben 14 erstreckt sich über einen Umfangswinkel von etwa 240°, der Drehkolben 15 über einen Umfangswinkel von etwa 110°. Zusammen wird eine Umfangswinkelsumme von näherungsweise 360° erreicht. Von einem symmetrischen Modell mit zwei sich etwa über einen Halbbogen erstreckenden Ringkolben ausgehend, ist der Ladekolben 14 um einen Winkel vergrößert worden, um den der Treibkolben 15 verkleinert ist. Wie insbesondere die Fig. 2 bis 4 veranschaulichen, lassen sich auch mit ungleichlangen Kolben die besonderen Eigenschaften des Drehkolbensystems, d.h. die wechselweise Sperrfunktionen eines Kolbens in der Kolbenbahn des anderen Kolbens und eine kämmende Aufeinanderfolge der Stirnseiten der Kolben mit äußerst kleinen schädlichen Räumen, gut verwirklichen.

Die unterschiedliche Kolbenlänge bewirkt, worauf es eigentlich ankommt, unterschiedlich große Arbeitsräume. Diese werden benötigt, da sich beim Übergang vom Ladekolben auf den Treibkolben in der Brennkammer eine Temperaturerhöhung und damit eine Gasausdehnung ergibt, die ein größeres, z. B. dreifaches Arbeitsvolumen für den Treibkolben verlangt. Andernfalls müßten Brenngase mit einem beträchtlichen Restarbeitsdruck in den Auspuff abgelassen werden. Zur Volumenabstimmung dient auch die bereits erwähnte Durchmesservergrößerung beim Treibkolben gegenüber dem Ladekolben. Die kombinierte Anwendung beider Möglichkeiten vermeidet dabei eine extreme Länge beim Ladekolben und eine extreme Kürzung des Treibkolbens mit ungünstigen Wirkungen für den Druckverlauf insbesondere am Ladekolben.

Die geometrische Auslegung des Motors geht von den Arbeitsräumen des Motors aus, die in Umfangsrichtung zwischen den Stirnseiten der Kolben 14, 15 frei bleiben. Die Kolbenbahn 12 des Kolbens 14 läßt sich gegen die Drehrichtung dieses Kolbens vom Durchdringungsbereich 11 aus festlegen:

Im geringen (Dichtungs-) Abstand vor dem Durchdringungsbereich 11 liegt die Öffnung des Überleitungskanals 27 und in der Umfangslänge des Kompressions-Arbeitsraums vor dieser Öffnung endet der Einlaßbereich des Ansaugstutzens 20, der sich über eine weite Umfangslänge bis nahe hinter den Durchdringungsbereich erstreckt. Andererseits liegt die Öffnung 32 des Überleitungskanals 28 in kurzem (Dichtungs-) Abstand hinter dem Durchdringungsbereich 11, während der Auslaß 25 um die Länge des Arbeitsraums, als um mehr als 180° in Umfangsrichtung, weiter öffnet, wobei sich die Öffnung wieder bis zu einem Abstand vor dem Durchdringungsbereich 11 erstreckt.

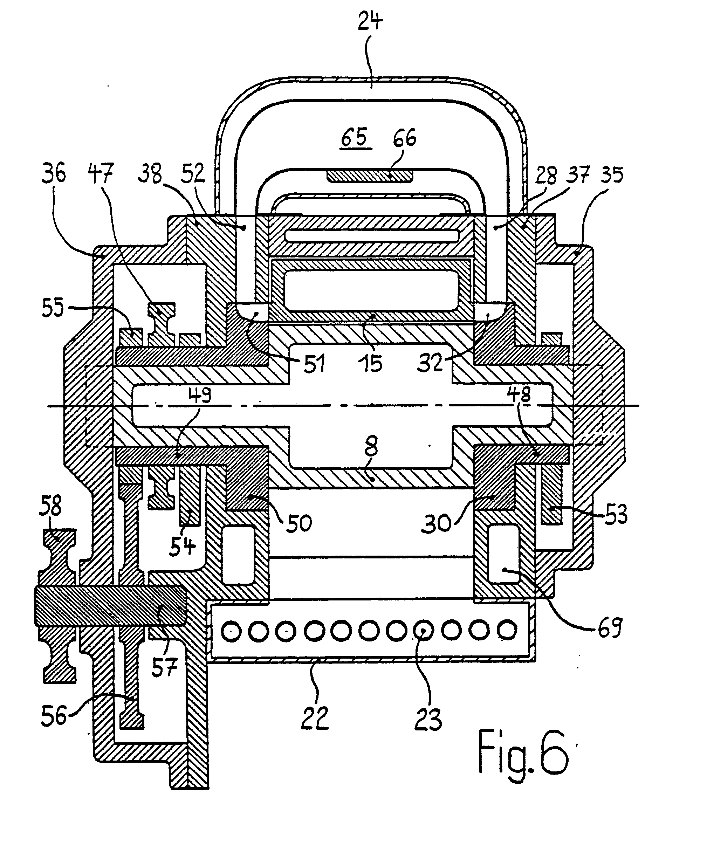

Der aus Fig. 5 zu ersehende Schnitt durch den Bereich des Ladekolbens 14 gibt näheren Aufschluß über den konstruktiven Aufbau der Drehkolbenbrennkraftmaschine 1. Die Hohlnabe 7 bildet zusammen mit zwei sie endseitig aufnehmenden Lagerschalen 35, 36 und dem Gehäuseblock 2, unter Einschluß beidseitig zwischengesetzter Gehäuseplatten 37, 38, eine ruhende starre Einheit. Einen im Gehäuseblock 2 mit erweitertem Durchmesser ausgeführten mittleren Bereich der Hohlnabe 7 umschließt der Drehkolben 14, wobei er beidseitig fest mit Lagerbuchsen 39 bzw. 40 verbunden ist, die auf den engeren Endzapfen der Nabe 7 laufen. Diese Lagerbuchsen tragen an ihrem dem Drehkolben 14 zugewandten Ende die bereits erwähnte Ventil-Ringscheibe 29 bzw. eine ganz entsprechend ausgebildete Ringscheibe 41 an der anderen Buchse. Der Ring 29 weist die Ventilöffnung 31 und der Ring 41 eine ganz entsprechende Ventilöffnung 42 auf. Diese Ventilöffnungen 31, 42 arbeiten mit dem nach unten (innerhalb der Gehäuseplatte 37) herausgeführten Kanal 27 bzw. mit einem ganz entsprechenden Kanal 43 in der Gehäuseplatte 38 zusammen. Die damit doppelt gebildeten Ventileinrichtungen sorgen zum einen für eine schnelle, effektive und verlustarme Ausbringung komprimierter Luft aus dem Arbeitsbereich 12 des Ladekolbens 14 wie auch für einen erschütterungsarmen Lauf des symmetrisch belasteten Ladekolbens.

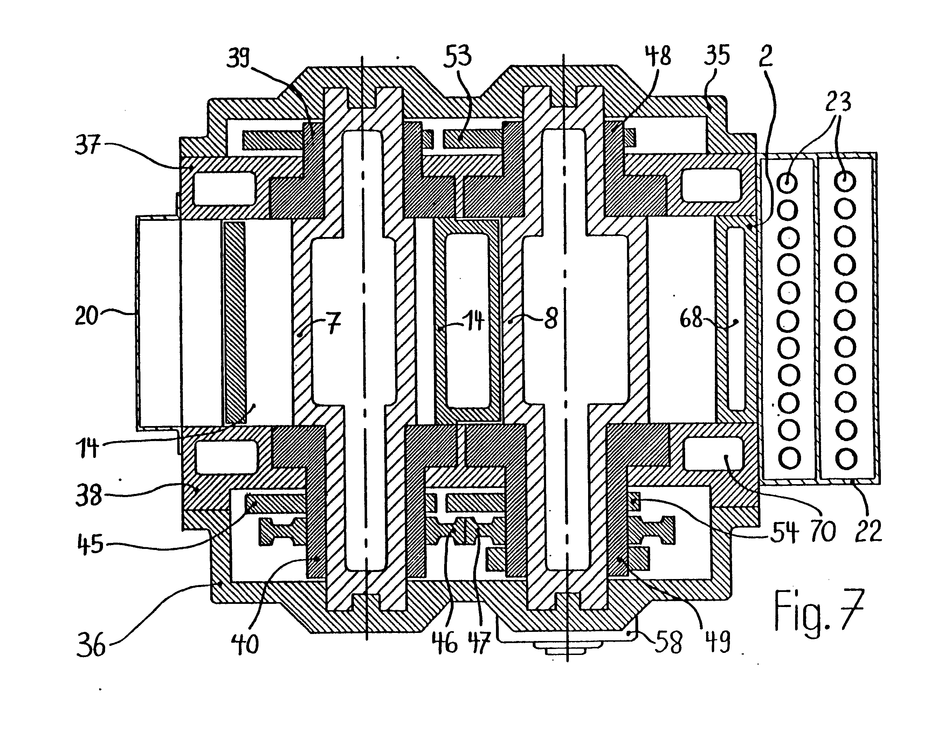

Zum Ausgleich von Massenunwuchten sind zwei Gegengewichte 44 bzw. 45 innerhalb der Gehäuseschalen 35 und 36 auf den Lagerbuchsen 39 bzw. 40 montiert; letztere trägt weiterhin ein Ritzel 46, welches mit einem mit dem Treibkolben 14 verbundenen Ritzel 47 (vgl. Fig. 6 und 7) gleicher Zähnezahl kämmt, um einen gegensinnigen Synchronlauf der beiden Kolben sicherzustellen.

Eine schnittbildliche axiale Ansicht durch den Bereich des Treibkolbens 15 zeigt einen ganz ähnlichen Aufbau wie beim Ladekolben 14. Die Hohlnabe 8 ist mit beidersetigen Zapfen in den Lagerschalen 35 und 36 festgelegt, um auf den Lagerzapfen zwei Laufbuchsen 48 bzw. 49 aufzunehmen, die mit dem Treibkolben 15 fest verbunden sind und auf der einen Seite als Flanschansatz die Ringscheibe 30 und auf der anderen Seite als Flanschansatz der Buchse 49 eine Ringscheibe 50 auszubilden, wobei die Ringscheibe 30 die Ventilöffnung 32 und die Ringscheibe 50 eine entsprechende Ventilöffnung 51 umfaßt. Die Ventilöffnungen 32, 51 arbeiten bei jedem Umlauf einmal mit dem Kanal 28, der in der Gehäuseplatte 37 ausgebildet ist, bzw. mit einem entsprechend in der anderen Gehäuseplatte 38 ausgebildeten Kanal 52 zusammen. Diese Kanäle sind zur Brennkammer 24 hin offen, um von dort her druckbeaufschlagte Brenngase hinter den Drehkolben 15 einzuleiten. Auch hier sorgt die beidseitige Anordnung der Einlaßventile für eine verlustarme und schnelle Gasüberleitung, wie sie insbesondere für sehr hohe Drehzahlen wertvoll ist.

Auch die Laufbuchsen 48, 49 tragen Ausgleichsgewichte 53, 54. Weiterhin weist die Laufbuchse 49 neben dem Synchronisierungsritzel 47 ein Abtriebsritzel 55 auf, welches mit einem Zahnrad 56 auf einer gesonderten, in der Lagerschale 36 und der Gehäuseplatte 38 gelagerten Welle 57 sitzt und außenseitig ein weiteres Ritzel 58 für einen drehzahluntersetzten Abtrieb trägt.

Der vorstehend beschriebene Aufbau ist überaus kompakt und in seinen Grundzügen symmetrisch, um die bei einer solchen Drehkolbenanordnung anzustrebenden hohen Drehzahlen unwuchtfrei und in symmetrierter Belastung zu ermöglichen. Damit in dieser Hinsicht beiderseits der Drehkolben Ventilöffnungen angebracht werden können, sind die Steuerringe 29, 41 bzw. 30, 50 zweckmäßig so ausgelegt, daß sie sich umfangsseitig nicht berühren. Sie können dann paarweise in gemeinsamen Ebenen angeordnet werden. Besonders interessant ist die Einlagerung der Steuerringe in das Gehäuse (hier in die Gehäuseplatten 37, 38), in dem sie flächenbündig versenkt liegen. Auch die damit unproblematisch ermöglichte beidseitige Lagerung beider Drehkolben ist für eine Auslegung als Schnelläufer wichtig.

Während die mechanischen Teile auf eine hochtourige Arbeitsweise ausgelegt sind, ist der Betrieb des Brennraums (vergl. insbesondere Fig. 1) als beinahe stationär zu betrachten. Die über den Ladekolben 14 zugeführte, praktisch adiabatisch komprimierte Luft wird im Wärmetauscher 22 durch Auspuffgase zusätzlich aufgeheizt und gelangt von dort in die Brennkammer 24, die gleichfalls noch vom Gehäuse des Wärmetauschers 22 umschlossen ist. Vor der Brennkammer 24 erfolgt eine Brennstoffzufuhr über mehrere Kapillarröhrchen 60 zu einer filmartigen Benetzung einer scharf auslaufenden Zerstäuberklinge 61 zwischen zwei verstellbaren Düsenlippen 62, 63, um von dort tangential in einen zylindrischen, quergerichteten Innenraum-Kanal 65 der Brennkammer 24 zu gelangen. Mit Hilfe der Zerstäuberklinge 61 und unter Einwirkung der mit den Düsenlippen 62, 63 gebildeten Flachstrahldüse entsteht ein Luft-Brennstoff-Gemisch mit feinster Verteilung der Brennstoffpartikel. Dieses Gemisch strömt in der zylindrischen, quergerichteten Brennkammer von einer mittigen Einleitung zu beiden Seiten walzenförmig bewegt weiter, wobei eine sehr gute Durchmischung und gleichförmige Verbrennung erzielt wird. Diese Verbrennung ist stationär, was den Verbrennungs-Wirkungsgrad begünstigt und damit auch den Schadstoff-Ausstoß vermindert. Ein Ausreagieren des Brennstoffgemisches wird auch durch hohe Wandtemperaturen gefördert. In diesem Sinne, wie auch im Sinne einer Nachverdampfungszone für größere Brennstofftröpfchen, ist der vom Innenraum 65 der Brennkammer gebildete Kanal für das anströmende Gas mit einer Heißwand 66, z. B. mit einer Aluminium-Silikat-Faserschicht, ausgestattet. Weiterhin ist diese Heißwand 66 mit Hilfe von Glühfäden beheizbar gestaltet, was auch ein Vorglühen beim Anlassen ermöglicht.

Die Flachdüse mit den Düsenlippen 62, 63 kann als Drossel zur Leistungs- und Drehzahlregulierung eingesetzt werden. Sie kann aber auch ganz geschlossen werden, um den Wärmetauscher endseitig zu schließen. Dies ist unter anderem für den Start der Maschine vorgesehen, um anfangs einen vorgegebenen Arbeitsdruck im Wärmetauscher aufzubauen, der zur Glättung von Druckschwankungen eine Mindestgröße aufweisen soll.

Die Betriebsdrücke der Drehkolbenbrennkraftmaschine liegen mit Werten zwischen 8 und 10 bar in der Brennkammer generell niedriger als die Spitzenwerte in Hubkolbenmaschinen. Der geringere Druck erlaubt es in Kombinationen mit Drehzahlen von maximal etwa 18.000 U/min. von reibenden Dichtungen abzusehen. Wie insbesondere aus Fig. 1 ersichtlich ist, ergeben sich zwischen den druckbeaufschlagten Stirnflächen 16 bzw. 19 der Drehkolben 14 bzw. 15 und feststehenden Gehäuseteilen lange Spalte, die zur Reduzierung von Leckverlusten unter Berücksichtigung praktischer Toleranzen und Wärmedehnungen möglichst eng gehalten sind. Entsprechendes gilt auch für einen möglichst dichten Abschluß der Kolbenbahn eines Kolbens durch den jeweils im Überschneidungsbereich befindlichen anderen Kolben. Die Anschmiegung des jeweils im Durchdringungsbereich befindlichen Kolbens an die Nabe des anderen Kolbens ist für die Abdichtung im Durchdringungsbereich wesentlich. Bei der gezeigten Ausführungsform ist die Länge des Dichtungsspaltes dadurch gewonnen, daß die beiden Naben konkave Zylinderflächen 9 und 10 tragen, wobei die Außenradien der beiden Drehkolben 14, 15 zusammen größer sind als der Abstand zwischen den beiden Drehachsen 3, 4.

Um bestmögliche Dichtungstoleranzen einhalten zu können, kann der Innenraum der Hohlnaben 7, 8 zur Kühlung herangezogen werden. Auch die Hohlräume in den Drehkolben 14, 15 sind für eine Kühlung heranziebar. Im Gehäuseblock sind verschieden geformte Kühlkanäle 67, 68, 69 und 70 hierzu vorgesehen.

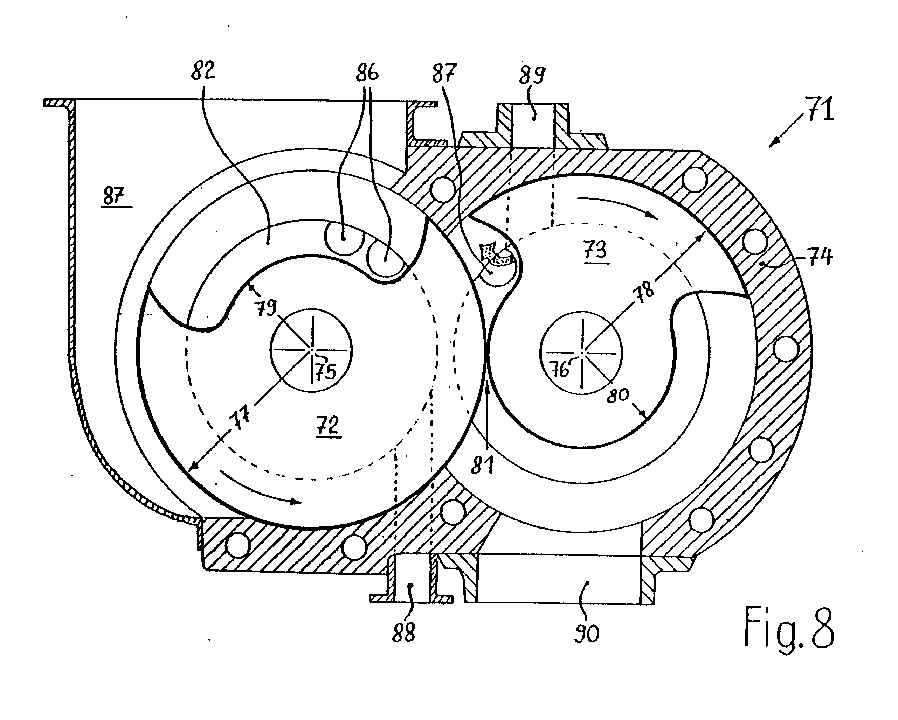

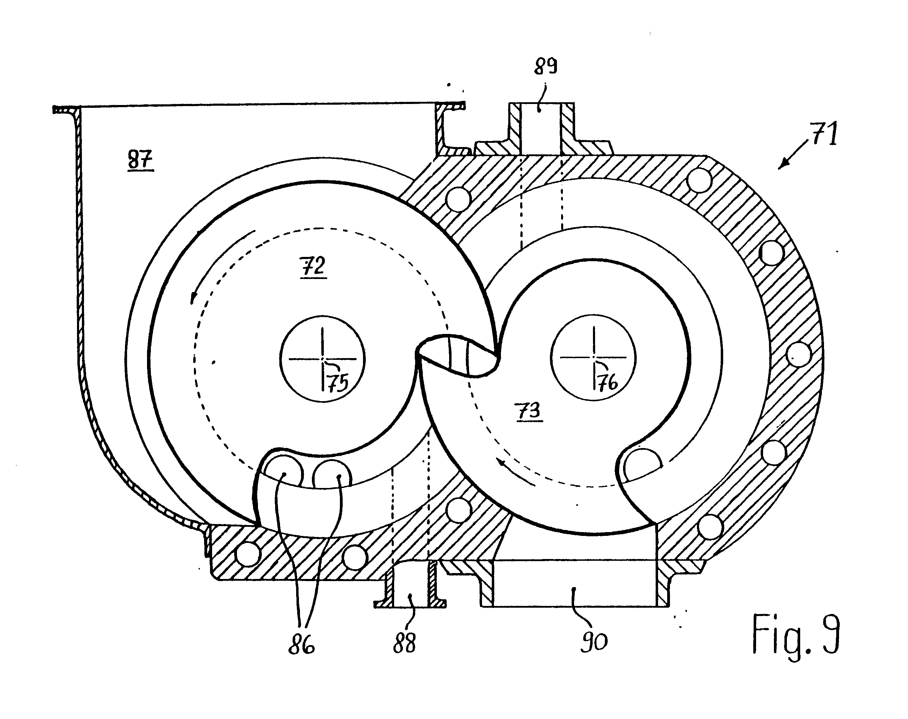

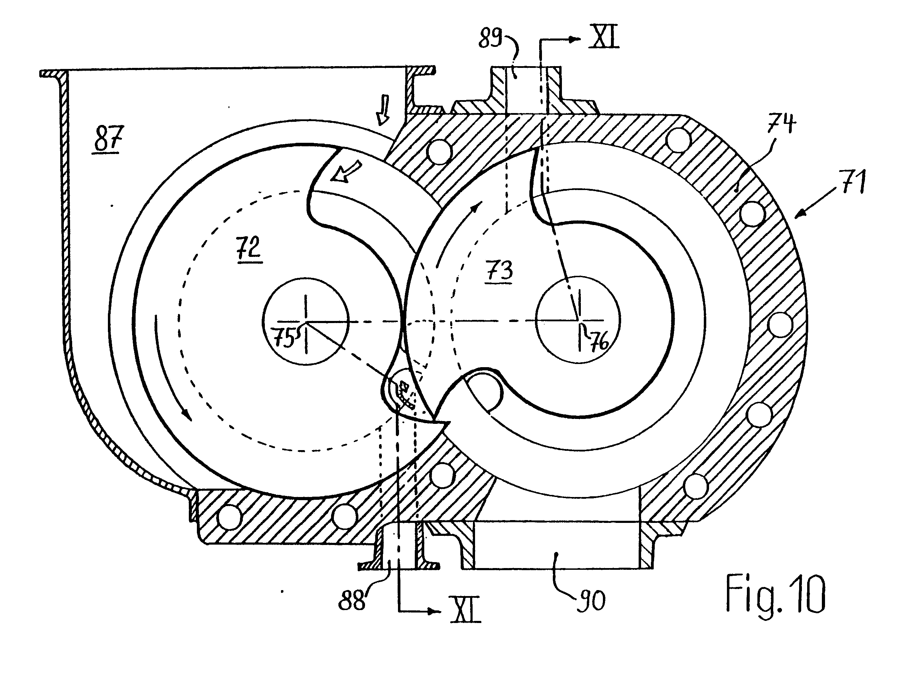

In den Fig. 8 bis 11 ist eine abgewandelte Ausführungsform dargestellt, bei der sich jeweils der Außendurchmesser des einen Drehkolbens und Innendurchmesser des anderen Drehkolbens zum Abstand zwischen den beiden Drehkolbenachsen ergänzen, wodurch es nicht mehr erforderlich ist, feststehende Naben vorzusehen.

In den Fig. 8 bis 10 sind wiederum in schematisierter Darstellung im Längsschnitt durch eine insgesamt mit 71 bezeichnete Brennkraftmaschine verschiedene Umlaufphasen zweier synchron gegensinnig drehender Drehkolben 72, 73 dargestellt, von denen der Drehkolben 72 einen Ladekolben und der Drehkolben 73 einen Treibkolben bildet. Beide Kolben 72, 73 laufen wiederum in einen Gehäuseblock 74 mit prismatischem, im Querschnitt 8-förmigem Innenraum um jeweils eine von zwei Achsen 75, 76 um.

Jeder der beiden Kolben hat wiederum einen Außenradius 77 bzw. 78, der nur einen Teil des Umfangs umspannt, wobei sich die Umfangswinkel wieder näherungsweise zu 360° ergänzen. In den übrigen Bereichen ist der Umfang der Kolben durch einen inneren kleineren Durchmesser 79 bzw. 80 definiert. Der innere Durchmesser des einen Kolbens und der äußere Durchmesser des anderen Kolbens (77 mit 80 bzw. 78 mit 79) ergeben zusammen, bis auf einen möglichst kleinen verbleibenden Restspalt, den Abstand zwischen den beiden Achsen 75 und 76.

Diese Ausführungsform läßt sich als Grenzfall der Ausführungsform nach den Fig. 1 bis 7 verstehen, bei dem durch Auseinanderrücken der Achsen (bzw. Verkleinern der Drehkolbendurchmesser) die konkaven Ausnehmungen an den Naben 7, 8 bis zum gänzlichen Wegfall reduziert sind. Die dann eintretende zylindrische Form der Naben braucht nicht mehr feststehend ausgebildet zu sein, vielmehr kann sie dann mit den Drehkolben umlaufen.

Diese Ausführungsform hat fraglos eine Schwachstelle an einer jeweiligen Berührungslinie 81 zwischen den beiden Kolben, an der der zur Vermeidung von Reibungen einzuhaltende Minimalspalt nur kurz ist. Allerdings kommt bei dieser Ausführungsform ein Bewegungspalt zwischen Drehkolben und einer feststehenden Nabe in Wegfall, weiterhin ist der Aufbau des Drehkolbens robuster und einfacher.

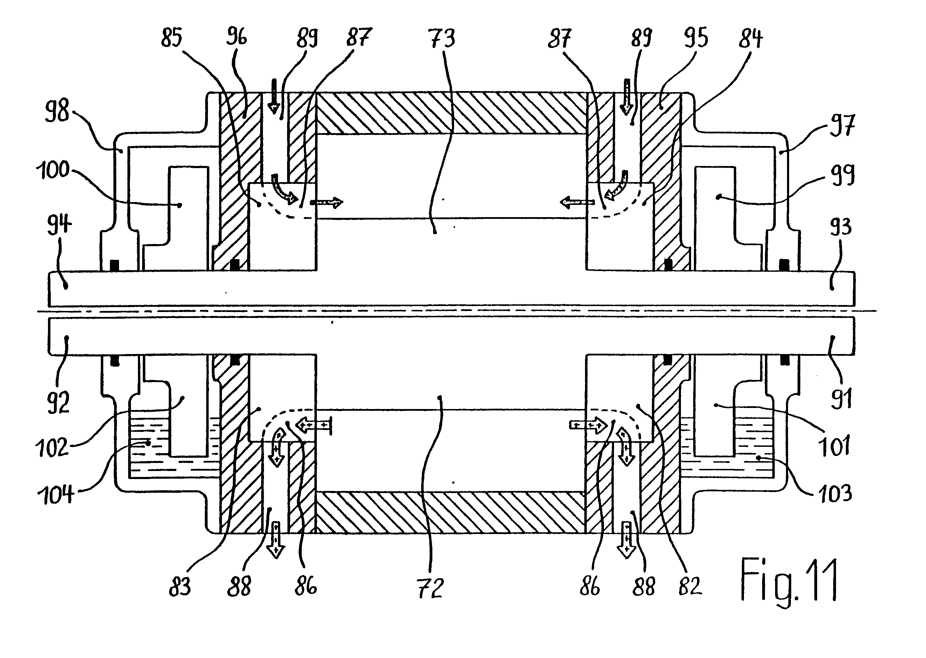

Übereinstimmend mit der anhand Fig. 1 bis 7 erläuterten Ausführungsform besitzt auch die Drehkolbenmaschine 71 an jedem der Drehkolben 72, 73 zwei beidendig angesetzte ringförmige Steuerkörper-Ringscheiben 82, 83 bzw. 84 und 85, die jeweils paarweise an jedem der Drehkolben 72, 73 im symmetrischer Anordnung angebracht sind (vgl. Fig. 11). Die Steuerkörper besitzen bogenförmige gerundete und zum Umfang hin offene Steueröffnungen 86 bzw. 86', die an der Drehscheibe 82 zur besseren Überleitung der komprimierten Luft doppelt eingearbeitet sind. Die Funktionen der Drehkolbenbrennkraftmaschine 71 sind im übrigen ganz entsprechend die der Drehkolbenbrennkraftmaschine 1 mit Ansaugen von Luft durch einen Ansaugstutzen 87, Ausdrücken über einen Gehäusekanal 88 in eine (nicht dargestellte) Brennkammer mit vorgeschaltetem Wärmetauscher, Übergang aus dem Wärmetauscher durch einen weiteren Gehäusekanal 89 zum Treibkolben 73 hin und Auslaß über eine Auslaßöffnung 90.

Wie aus Fig. 11 weiter ersichtlich, weisen die Drehkolben beidseitig Wellenstümpfe 91 und 92 bzw. 93 und 94 auf, über die die Drehkolben in Gehäuseplatten 95 bzw. 96, die auch die Kanäle 88 und 89 enthalten, gelagert sind. Weiterhin durchgreifen die Wellenstümpfe 91 bis 94 Gehäuseschalen 97, 98 und darin gelagerte Ritzel 99, 100, 101 und 102, die mit gleicher Zähnezahl ausgebildet sind und mit kämmendem Eingriff für einen Synchronlauf der beiden Drehkolben 72 und 73 sorgen. Abweichend von der Ausführungsform nach den Ansprüchen 1 bis 7 sind diese Ritzelpaare beidseitig der Kolben angeordnet, um einen besonders starren und präzisen Gleichlauf zu erzielen. Die Ritzel durchlaufen ein Ölbad 103 bzw. 104 in den Gehäuseschalen, um von dort her für eine Schmierung und Kühlung zu sorgen.

Es versteht sich, daß beide Drehkolbenbrennkraftmaschinen bei so hohen Temperaturen betrieben werden, wie sie das Material zuläßt, um einen hohen Motorwirkungsgrad zu erhalten. Bei metallischen Werkstoffen muß dabei eine Kühlung zumindest am Treibkolben angesetzt werden, der nur mit heißen Gasen beaufschlagt ist. Bei Einsatz keramischer Werkstoffe wird vorraussichtlich auf eine Kühlung zu verzichten, der Motor bei entsprechend hohen Temperaturen zu betreiben sein.

Ein besonderer Vorteil dieser Maschine ist der mit reinen Drehbewegungn der auswuchtbaren Kolben erreichbare hochdrehende Betrieb, der nicht nur einen vibrationsarmen, sondern auch einen effektiven Lauf erzielt. Der Treibkolben leistet (anders als der Hubkolben eines Viertaktmotors) bei jeder Wellendrehung Arbeit, und zwar über einen weiten Umdrehungswinkel von z. B. 200°. Demgegenüber vermag der Hubkolben regelmäßig nur über einen Drehwinkel von 120° der zugehörigen Kurbelwelle Arbeit zu leisten und dies auch nur mit einem zum Anfang und zum Ende der Bewegung stark reduzierten Winkelarm.

Die vorstehend beschriebenen Ausführungsbeispiele gehen von der energetisch wie auch in bezug auf die Schadstoffemision besonders günstige kontinuierliche Verbrennung aus. Es versteht sich aber, daß neben der kontinuierlichen im offenen Kreisprozeß wie im

Joul'schen Kreisprozeß auch Kreisprozesse mit periodischer Verbrennung - etwa durch Einspritzung direkt in die Kolbenbahn des Treibkolbens oder auch in eine Brennkammer - oder auch ein Clausius-Rankine Kreisprozeß anwendbar bleiben.

In jedem dieser betrachteten Fälle ist die Geometrie der Arbeitsräume von besonderer Bedeutung. Insbesondere sind unvorteilhaft geschnittene flache Arbeitsräume, bei denen etwa der äußere Durchmesser des Drehkolbens den Innendurchmesser geringfügig übersteigt, vermieden. Hier ist das Verhältnis der äußeren und inneren Kolbendurchmesser jeweils beinahe auf einen Faktor 2 gebracht. Eine Begrenzung findet dieses Durchmesser-Verhältnis in erster Linie mit Rücksicht auf die zu einem sauberen Kämmeingriff zunehmend spitzer zu verschneidenden Stirnflächenkonturen (Radlinien). Im Ausführungsbeispiel nach Fig. 1 sind im einzelnen (bezogen auf den Achsabstand) am Ladekolben ein äußerer Durchmesser von 1,4 und ein innerer Durchmesser von 0,7, sowie am Treibkolben ein äußerer Durchmesser von 1,5 und ein innerer Durchmesser von 0,8 anzusetzen.

Auch die Breite der Kolbenläufer ist für die Eigenschaften und den Wirkungsgrad des Motors von Bedeutung. Die übereinstimmende Breite der Kolbenläufer entspricht etwa der Abstand der beiden Achsen voneinander.

## Patentansprüche

1. Drehkolbenbrennkraftmaschine mit zwei parallelachsig gelagerten und bei synchrongegensinnigem Umlauf ineinandergreifenden Drehkolben (14, 15, 72, 73), von denen der eine als Kompressions- oder Ladekolben (14, 72) und der andere als Expansions- oder Treibkolben (15, 73) arbeitet, deren in einem gemeinsamen Gehäuse (2) ausgeformte Rotations-Kolbenbahnen (12, 13) ringförmig sind, einander in einem Durchdringungsbereich überschneiden und mit einer getrennten Brennkammer (24) für das komprimierte Gemisch über Kanäle in Verbindung stehen, die durch Absperrventile in Form mit den Drehkolben (14, 15, 72, 73) fest verbundener Steuerkörper (29, 30, 41, 50, 82 - 85) gesteuert werden, wobei jeder Drehkolben (14, 15, 72, 73) radial außenseitig und innenseitig durch einen kreiszylindrisch zu seiner Drehachse verlaufenden und an die Kolbenbahn angepaßten Außenbogen bzw. Innenbogen begrenzt ist, dadurch gekennzeichnet, daß die beiden Drehkolben (14, 15; 72, 73) unter Einhaltung sich näherungsweise zu 360° ergänzender Umfangswinkel ungleiche Umfangslängen aufweisen, die unterschiedlich große, einen Druckanstieg zwischen Ansaugluft und Brenngas berücksichtigende Arbeitsräume in den Drehkolbenbahnen (12, 13) freilassen.

2. Drehkolbenbrennkraftmaschine nach Anspruch 1, dadurch gekennzeichnet, daß der Ladekolben (14, 72) eine wesentlich mehr als den halben Umfang überspannende Länge aufweist, wobei er mit einer Einlaßöffnung (Ansaugstutzen 20) verbunden ist, die sich gegen die Umlaufrichtung des Kolbens etwa bis zu einem Abstand in der Länge des Arbeitsraums von einer Auslaßöffnung (27, 43) vor dem Durchdringungsbereich (11) erstreckt.

3. Drehkolbenbrennkraftmaschine nach Anspruch 2, dadurch gekennzeichnet, daß die Einlaßöffnung (Ausgangstutzen 20) in Umlaufrichtung kurz hinter dem Durchdringungsbereich (11) beginnt.

4. Drehkolbenbrennkraftmaschine nach Anspruch 1, 2 oder 3, dadurch gekennzeichnet, daß der Treibkolben (15, 73) eine wesentlich weniger als den halben Umfang überspannende Länge aufweist, wobei er mit einer Auslaßöffnung (25, 90) verbunden ist, die in Umlaufrichtung des Kolbens etwa nach der Länge des Arbeitsraums hinter dem Durchdringungsbereich (11) beginnt.

5. Drehkolbenbrennkraftmaschine nach Anspruch 4, dadurch gekennzeichnet, daß sich die Auslaßöffnung (25, 90) in Umlaufrichtung bis kurz vor den Durchdringungsbereich (11) erstreckt.

6. Drehkolbenbrennkraftmaschine nach einem der Ansprüche 1 bis 5, dadurch gekennzeichnet, daß die Steuerkörper in Form seitlich an den Kolben befestigten Ringscheiben (29, 30, 41, 50, 82 bis 85) ausgebildet sind, die in ringförmigen Gehäuseausnehmungen neben den Kolbenbahnen (12, 13) laufen und deren Außenradien zusammen kleiner als der Achsabstand der Drehachsen (3, 4; 75, 76) sind.

7. Drehkolbenbrennkraftmaschine nach Anspruch 6, dadurch gekennzeichnet, daß die Kolben (14, 15, 72, 73) beidseitig mit Ringscheiben (29, 30, 41, 50, 82 bis 85) als Steuerkörper ausgestattet sind.

8. Drehkolbenbrennkraftmaschine nach Anspruch 6 oder 7, dadurch gekennzeichnet, daß die Ringscheiben (82, 83) jeweils mehrere in Umfangsrichtung hintereinanderliegende Öffnungen (85) aufweisen.

9. Drehkolbenbrennkraftmaschine nach Anspruch 6, 7 oder 8, dadurch gekennzeichnet, daß die Ringscheiben (82 bis 85) Öffnungen (85, 86) aufweisen, die zum äußeren Rand hin offen ausgebildet sind.

10. Drehkolbenbrennkraftmaschine nach einem der Ansprüche 1 bis 9, bei der der Innenradius jeweils eines der Kolben und der Außenradius des jeweils anderen Kolbens größer als der Abstand der beiden Achsen ist und bei der die Kolben um eine gehäusefeste Nabe umlaufen, deren Innendurchmesser dem Innendurchmesser der Kolben entspricht und die zur jeweils anderen Nabe hin im Durchdringungsbereich eine zylindrische Mantelausnehmung aufweisen, dadurch gekennzeichnet, daß auf jeder der Naben (7, 8) zumindest eine Steuerkörper-Ringscheibe (29, 30, 41, 50) und zumindest ein Zahnrad (46, 47) gelagert ist, welches mit dem anderen Zahnrad kämmt.

11. Drehkolbenbrennkraftmaschine nach Anspruch 10, dadurch gekennzeichnet, daß zumindest eine der Naben (7, 8) hohl ausgebildet und an ein Kühlmittelsystem angeschlossen ist.

12. Drehkolbenbrennkraftmaschine nach einem der Ansprüche 1 bis 9, bei der sich der Innenradius jeweils eines der Kolben mit dem Außenradius des anderen Kolbens etwa zum Abstand der Drehachsen ergänzen, dadurch gekennzeichnet, daß die Kolben (72, 73) auf einer mitlaufenden Welle (91 bis 94) gelagert sind.

13. Drehkolbenbrennkraftmaschine nach einem der Ansprüche 1 bis 13, dadurch gekennzeichnet, daß der Arbeitsraum des Treibkolbens (15, 73) mit zumindest zwei gegeneinander axial versetzten Einlaßkanälen (28, 52, 89) in Verbindung steht und daß die Brennkammer (24) einen parallel zu den Drehachsen (3, 4) verlaufenden Kanal (65) bildet, der etwa mittig quer (Flachdüse 62, 63) angeströmt wird.

14. Drehkolbenbrennkraftmaschine nach Anspruch 13, dadurch gekennzeichnet, daß der Kanal (65) einen gerundeten Querschnitt zu einer tangentialen Wirbelanströmung besitzt.

15. Drehkolbenbrennkraftmaschine nach Anspruch 13 oder 15, dadurch gekennzeichnet, daß der Kanal (65) gegenüber einer Anströmöffnung eine beheizbare Heißwand (66) aufweist.

16. Drehkolbenbrennkraftmaschine nach einem der Ansprüche 13 bis 15, dadurch gekennzeichnet, daß der Kanal (65) eine mit einem Zerstäubersystem (60, 61) ausgestattete Anströmöffnung besitzt.

17. Drehkolbenbrennkraftmaschine nach Anspruch 16, dadurch gekennzeichnet, daß das Zerstäubersystem eine in Strömungsrichtung scharf auslaufende Zerstäuberklinge (61) umfaßt.

## Claims

1. A rotary piston internal combustion engine having two rotary pistons (14, 15, 72, 73) mounted with parallel axes and interengaging with synchronous rotation in opposite directions, of which the one works as a compression or charging piston (14, 72) and the other as an expansion or driving piston (15, 73) and of which the rotational paths (12, 13), which are formed in a common housing (2), are annular, intersect one another in a penetration region and are in communication, through ducts, with a separate combustion chamber (24) for the compressed mixture, which ducts are controlled by shut-off valves in the form of control members (29, 30, 41, 50, 82 - 85) rigidly connected to the rotary pistons (14, 15, 72, 73) each rotary piston (14, 15, 72, 73) being bounded radially outside and inside by an outer arc and an inner arc respectively, each extending circularly cylindrically to its axis of rotation and being adapted to the piston path, characterised in that the two rotary pistons (14, 15; 72, 73) while adhering to angles at the circumference which supplement one another approximately to form 360°, have unequal circumferential lengths which leave free working spaces of different sizes, allowing for a pressure rise between intake air and combustible gas, in the rotary piston paths (12, 13).

2. A rotary piston internal combustion engine according to claim 1, characterised in that the charging piston (14, 72) has a length spanning considerably more than half the circumference, and is connected to an inlet (induction socket 20) which extends counter to the direction of rotation of the piston substantially to a distance as long as the working space from an outlet (27, 43) in front of the penetration region (11).

3. A rotary piston internal combustion engine according to claim 2, characterised in that the inlet (induction socket 20) begins shortly behind the penetration region (11) in the direction of rotation.

4. A rotary piston internal combustion engine according to claim 1, 2 or 3, characterised in that the driving piston (15, 73) has a length spanning considerably less than half the circumference and is connected to an outlet (25, 90) which begins in the direction of rotation of the piston substantially after the length of the working space behind the penetration region (11).

5. A rotary piston internal combustion engine according to claim 4, characterised in that the outlet (25, 90) extends, in the direction of rotation, to shortly before the penetration region (11).

6. A rotary piston internal combustion engine according to any one of claims 1 to 5, characterised in that the control members are constructed in the form of annular discs (29, 30, 41, 50, 82 to 85) which are secured laterally to the pistons and run in annular housing recesses beside the piston paths (12, 13) and the outer radii of which are together smaller than the distance between the axes of the axes of rotation (3, 4; 75, 76).

7. A rotary piston internal combustion engine according to claim 6, characterised in that the pistons (14, 15, 72, 73) are equipped with annular discs (29, 30, 41, 50, 82 to 85) as control members at both sides.

8. A rotary piston internal combustion engine according to claim 6 or 7, characterised in that the annular discs (82, 83) each comprise a plurality of apertures (85) situated one behind the other in the circumferential direction.

9. A rotary piston internal combustion engine according to claim 6, 7, or 8 characterised in that the annular discs (82 to 85) comprise apertures (85, 86) which are made open towards the outer edge.

10. A rotary piston internal combustion engine according to any one of claims 1 to 9, wherein the inner radius of one of the pistons and the outer radius of the other piston are greater than the distance between the two axes and wherein the pistons rotate about a hub fixed to the housing, the external diameter of which hub corresponds to the internal diameter of the piston and each of which has a cylindrical recess in its peripheral surface towards the other hub in the penetration region, characterised in that mounted on each of the hubs (7, 8) is at least one control-member-annular disc (29, 30, 41, 50) and at least one gearwheel (46, 47) which meshes with the other gearwheel.

11. A rotary piston internal combustion engine according to claim 10, characterised in that at least one of the hubs (7, 8) is made hollow and is connected to a coolant system.

12. A rotary piston internal combustion engine according to any one of claims 1 to 9, wherein the inner radius of one of the pistons supplements the outer radius of the other piston to form substantially the distance between the axes of rotation, characterised in that the pistons (72, 73) are mounted on a co-rotating shaft (91 to 94).

13. A rotary piston internal combustion engine according to any one of claims 1 to 12, characterised in that the working space of the driving piston (15, 73) is in communication with at least two inlet ducts (28, 52, 89) offset axially in relation to one another and in that the combustion chamber (24) forms a channel (65) which extends parallel to the axes of rotation (3, 4) and the flow towards which is substantially central and transverse (flat nozzle 62, 63).

14. A rotary piston internal combustion engine according to claim 13, characterised in that the channel (65) has a rounded cross-section to a tangential turbulent approach flow.

15. A rotary piston internal combustion engine according to claim 13 or 14, characterised in that the channel (65) comprises a heatable heating wall (66) opposite an approach flow opening.

16. A rotary piston internal combustion engine according to any one of claims 13 to 15, characterised in that the channel (65) has an approach flow opening equipped with an atomizer system (60, 61).

17. A rotary piston internal combustion engine according to claim 16, characterised in that the atomizer system comprises an atomizer blade (61) ending sharply in the direction of flow.

## Revendications

1. Moteur à combustion interne à pistons rotatifs comportant deux pistons rotatifs (14, 15; 72, 73) montés sur deux axes parallèles et s'imbriquant l'un dans l'autre lors d'une rotation synchrone en sens opposés, l'un des pistons servant de piston de compression ou d'alimentation (14, 72) et l'autre, de piston de détente ou moteur (15, 73), et les trajets de rotation des pistons formés dans un carter commun (2) étant annulaires, s'intersectionnant dans une zone d'interpénétration et étant en communication avec une chambre de combustion séparée (24) pour le mélange comprimé, par des canaux qui sont commandés par des valves d'arrêt ayant la forme d'organes de commande (29, 30, 41, 50, 82 - 85) reliés rigidement aux pistons rotatifs (14, 15; 72, 73), chaque piston rotatif (14, 15; 72, 73) étant délimité radialement, au niveau de son côté extérieur et de son côté intérieur, respectivement par un arc de cercle extérieur et un arc de cercle intérieur qui s'étendent de manière cylindrique circulaire par rapport à son axe de rotation et qui sont adaptés à son trajet de rotation, caractérisé en ce que les deux pistons rotatifs (14, 15; 72, 73), tout en se conformant à des angles inscrits qui ensemble couvrent environ 360°, présentent des longueurs circonférentielles différentes qui définissent, dans les trajets de rotation (12, 13) des pistons, des chambres de travail de dimensions différentes assurant une augmentation de pression entre l'air d'admission et le gaz combustible.

2. Moteur à combustion interne à pistons rotatifs suivant la revendication 1, caractérisé en ce que le piston d'alimentation (14, 72) présente une longueur couvrant en substance plus de la moitié de la circonférence, étant entendu qu'il est en communication avec un orifice d'admission (tubulure d'aspiration 20) qui, dans le sens contraire à la rotation du piston, s'étend jusqu'à un point situé à peu près à une distance égale à la longueur de la chambre de travail d'un orifice d'échappement (27, 43), situé devant la zone d'interpénétration (11).

3. Moteur à combustion interne à pistons rotatifs suivant la revendication 2, caractérisé en ce que l'orifice d'admission (tubulure d'aspiration 20) débute, dans le sens de rotation, peu après la zone d'interpénétration (11).

4. Moteur à combustion interne à pistons rotatifs suivant la revendication 1, 2 ou 3, caractérisé en ce que le piston moteur (15, 73) présente une longueur couvrant sensiblement moins de la moitié de la circonférence, étant entendu qu'il est en communication avec un orifice d'échappement (25, 90) qui, dans le sens de rotation du piston, débute peu après la longueur de la chambre de travail derrière la zone d'interpénétration (11).

5. Moteur à combustion interne à pistons rotatifs suivant la revendication 4, caractérisé en ce que l'orifice d'échappement (25, 90) s'étend, dans le sens de rotation, jusqu'à une courte distance devant la zone d'interpénétration (11).

6. Moteur à combustion interne à pistons rotatifs suivant l'une quelconque des revendications 1 à 5, caractérisé en ce que les organes de commande ont la forme de tiroirs annulaires (29, 39, 41, 50, 82 à 85) qui sont fixés latéralement aux pistons et se déplacent dans des évidements annulaires du carter, à côté des trajets de rotation des pistons (12, 13), leurs rayons extérieurs étant ensemble plus petits que l'écartement des axes de rotation (3, 4; 75, 76).

7. Moteur à combustion interne à pistons rotatifs suivant la revendication 6, caractérisé en ce que les pistons (14, 15; 72, 73) sont équipés

des deux côtés de tiroirs annulaires (29, 30, 41, 50, 82 à 85) servant d'organes de commande.

8. Moteur à combustion interne à pistons rotatifs suivant la revendication 6 ou 7, caractérisé en ce que les tiroirs annulaires (82, 83) présentent chacun plusieurs lumières (85) disposées l'une derrière l'autre dans le sens circonférentiel.

9. Moteur à combustion interne à pistons rotatifs suivant la revendication 6, 7 ou 8, caractérisé en ce que les tiroirs annulaires (82 à 85) présentent des lumières (85, 86) qui s'ouvrent vers le bord extérieur.

10. Moteur à combustion interne à pistons rotatifs suivant l'une quelconque des revendications 1 à 9, dans lequel le rayon intérieur d'un des pistons et le rayon extérieur de l'autre piston sont supérieurs à l'écartement des deux axes et dans lequel les pistons tournent autour de moyeux fixés au carter, dont le diamètre correspond au diamètre intérieur des pistons et qui présentent chacun un évidement périphérique cylindrique tourné chaque fois vers l'autre moyeu dans la zone d'interpénétration, caractérisé en ce qu'au moins un tiroir annulaire servant d'organe de commande (29, 30, 41, 50) et au moins une roue dentée (46, 47) sont montés sur chacun des moyeux (7, 8), la roue dentée étant en prise avec l'autre roue dentée.

11. Moteur à combustion interne à pistons rotatifs suivant la revendication 10, caractérisé en ce qu'au moins un des moyeux (7, 8) est creux et est raccordé à un circuit d'agent de refroidissement.

12. Moteur à combustion interne à pistons rotatifs suivant l'une quelconque des revendications 1 à 9, dans lequel le rayon intérieur de l'un des pistons et le rayon extérieur de l'autre piston correspondent ensemble environ à l'écartement des axes de rotation, caractérisé en ce que les pistons (72, 73) sont montés sur un arbre (91 à 94) tournant avec eux.

13. Moteur à combustion interne à pistons rotatifs suivant l'une quelconque des revendications 1 à 12, caractérisé en ce que la chambre de travail du piston moteur (15, 73) est en communication avec au moins deux canaux d'admission (28, 52, 89) décalés dans le sens axial et la chambre de combustion (24) forme un canal (65) qui s'étend parallèlement aux axes de rotation (3, 4) et qui est alimenté en substance transversalement en son milieu (ajutage plat 62, 63).

14. Moteur à combustion interne à pistons rotatifs suivant la revendication 13, caractérisé en ce que le canal (65) présente une section transversale ronde en vue d'une alimentation tourbillonnaire tangentielle.

15. Moteur à combustion interne à pistons rotatifs suivant la revendication 13 ou 14, caractérisé en ce que le canal (65) présente une paroi chauffable (66) en face d'un orifice d'alimentation.

16. Moteur à combustion interne à pistons rotatifs suivant l'une quelconque des revendications 13 à 15, caractérisé en ce que le canal (65) comporte un orifice d'alimentation équipé d'un système de diffusion (60, 61).

17. Moteur à combustion interne à pistons rotatifs suivant la revendication 16, caractérisé en ce que le système de diffusion comporte une lame de diffusion (61) se terminant en un bord vif dans le sens de l'écoulement.

Fig.1

Fig.2

Fig.3

Fig.4

Fig.5

0 223 798

Fig.6

7

Fig. 7

0 223 798

9

Fig.8

Fig. 9

0 223 798

Fig.10

Fig. 11